# EUROPEAN PATENT SPECIFICATION

(11) **EP 3 072 726 B1**
(45) Date of publication and mention of the grant of the patent: **09.08.2017**
(21) Application number: 16153349.2
(22) Date of filing: 27.05.2015
(51) Int. Cl.: B60K 7/00, B60K 17/04, F16H 57/02

(54) **PLANETARY GEAR UNIT**
PLANETENGETRIEBEEINHEIT
UNITÉ D'ENGRENAGE PLANÉTAIRE

(30) Priority: 11.06.2014 JP 2014120198
(43) Date of publication of application: 28.09.2016
(62) Divisional of application: 15169429.6
(73) Proprietor: KANZAKI KOKYUKOKI MFG. CO., LTD., Amagasaki-shi, Hyogo 661-0981 (JP); SUZUKI MOTOR CORPORATION, Hamamatsu-shi Shizuoka 432-8611 (JP)
(72) Inventor: IWAKI, Koji, Hyogo, 661-0981 (JP); IIDA, Masaru, Hyogo, 661-0981 (JP); TSUKAMOTO, Michio, Hyogo, 661-0981 (JP); FUKUDA, Toshiyuki, Hyogo, 661-0981 (JP); ITO, Ryo, Shizuoka, 432-8611 (JP); TANAKA, Junichiro, Shizuoka, 432-8611 (JP)
(74) Representative: Isarpatent

(56) References cited:
- US-A- 3 218 889
- US-A- 3 292 457
- US-A1- 2004 023 750
- US-A1- 2004 082 420
- US-A1- 2006 142 113

## Description

### BACKGROUND OF THE INVENTION

### Field of the Invention

The present invention relates to a planetary gear unit that decelerates input rotative power and outputs the resulting rotative power.

### Related Art

An electric motor driving device that includes an electric motor unit and a planetary gear unit and that decelerates rotative power from the electric motor unit by the planetary gear unit and outputs the resulting rotative power is conventionally known and is used as, for example, a wheel motor device in a work vehicle (e.g., JP-B 4743819). US 3,292,457 A describes a planetary- gear unit in accordance with the preamble of claim 1.

In the aforementioned conventional electric motor driving device, the planetary gear unit and the electric motor unit are connected such that the planetary output shaft is located coaxially with the motor output shaft of the electric motor unit to thereby reduce the size in the radial direction with reference to the motor output shaft (the planetary output shaft), but, on the other hand, there is still room for reducing the size in the axial direction of the motor output shaft (the planetary output shaft).

In particular, in the case of using the electric motor driving device as a wheel motor device in an electric motorcycle, it is necessary to reduce the size not only in the radial direction but also in the axial direction of the motor output shaft (the planetary output shaft) as much as possible while enhancing a supporting strength for the motor output shaft (the planetary output shaft).

### SUMMARY OF THE INVENTION

In view of the prior art, it is an object of the present invention to provide a planetary gear unit capable of being downsized in an axial direction as well as in a radial direction.

The present invention provides a planetary gear unit including a planetary input shaft that inputs rotative power, a sun gear connected to the planetary input shaft, a planetary gear that meshes with the sun gear, a carrier pin that supports the planetary gear in a relatively rotatable manner with respect thereto and that orbits around the sun gear together with the planetary gear, an internal gear that is a ring-like member whose inner circumferential edge meshes with the planetary gear and that functions as a fixed element, a carrier member that supports the carrier pin and that rotates around an axis line coaxial with the planetary input shaft in accordance with the orbital motion of the carrier pin around the sun gear, a planetary output shaft that is coaxial with the planetary input shaft and is relatively non-rotatable around the axis with respect to the carrier member, and a planetary case, wherein the planetary case includes a first planetary cover formed with an input opening into which the planetary input shaft is inserted, and a second planetary cover that faces the first planetary cover across the sun gear and the planetary gear and that is formed with an output opening into which the planetary output shaft is inserted, wherein the internal gear is formed with a plurality of internal-gear-side fastening holes arranged in the circumferential direction, wherein the first and second planetary covers are formed with planetary-cover-side fastening holes corresponding to the internal-gear-side fastening holes, wherein the first planetary cover, the second planetary cover and the internal gear are integrally connected one another using the planetary-cover-side fastening holes and the internal-gear-side fastening hole, with the internal gear being sandwiched between the first and second planetary covers so as to form a planetary-side peripheral wall of the planetary case, wherein the first planetary cover is formed with mounting holes, each of which is arranged between the adjacent planetary-cover-side fastening holes in the circumferential direction, wherein the first planetary cover, the second planetary cover and the internal gear are capable of being mounted to a fixing member using the mounting holes, with the first planetary cover, the second planetary cover and the internal gear being integrally connected one another, and wherein the internal gear is configured so that the outer circumferential surface of the regions corresponding to the mounting holes with respect to the circumferential direction are depressed radially inward compared with the outer circumferential surface of the regions where the internal-gear-side fastening holes are formed.

The planetary gear unit according to the present invention makes it possible to be downsized in the radial direction as much as possible.

The plurality of internal-gear-side fastening holes preferably may include internal-gear-side first threaded holes opening toward the first planetary cover and internal-gear-side second threaded holes opening toward the second planetary cover.

In this case, the planetary-cover-side fastening holes include first-planetary-cover-side fastening holes formed in the first planetary cover so as to correspond to the internal-gear-side first threaded holes and second-planetary-cover-side fastening holes formed in the second planetary cover so as to correspond to the internal-gear-side second threaded holes.

### BRIEF DESCRIPTION OF THE DRAWINGS

The above, and other objects, features and advantages of the present invention will become apparent from the detailed description thereof in conjunction with the accompanying drawings therein.
Fig. 1 is a front view of an electric motor driving device applied as a wheel motor device of an electric motorcycle.
Fig. 2 is a vertical cross-sectional view of the electric motor driving device.
Fig. 3 is an end view of the electric motor driving device.
Fig. 4 is a perspective view of a planetary gear unit of the electric motor driving device.
Fig. 5 is an exploded perspective view of the planetary gear unit.
Fig. 6 is an enlarged perspective view in the vicinity of carrier pins and the carrier member in the planetary gear unit.
Fig. 7 is an enlarged view of the VII part in FIG. 2.
Fig. 8 is a vertical cross-sectional view of a modification of the planetary gear unit.
Fig. 9 a vertical cross-sectional view of another modification of the planetary gear unit.

### DETAILED DESCRIPTION OF THE PREFERRED EMBODIMENTS

Below, an electric motor driving device will now be described with reference to the appended drawings.

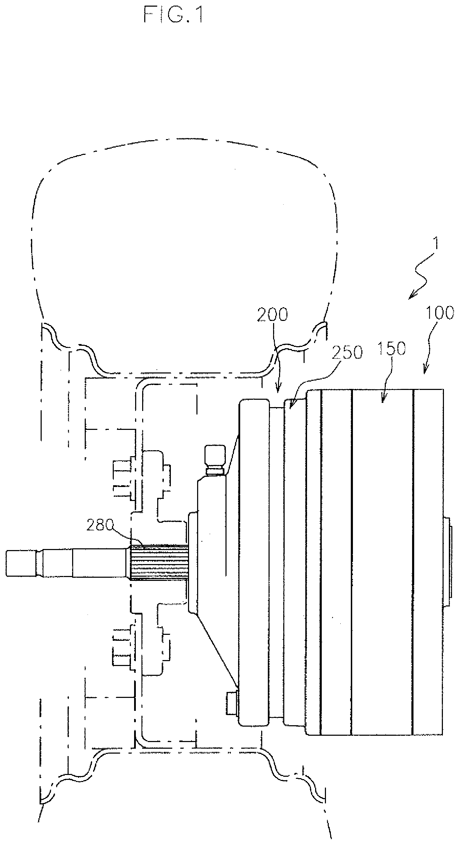

FIG. 1 shows a front view of an electric motor driving device 1 applied as a wheel motor device of an electric motorcycle.

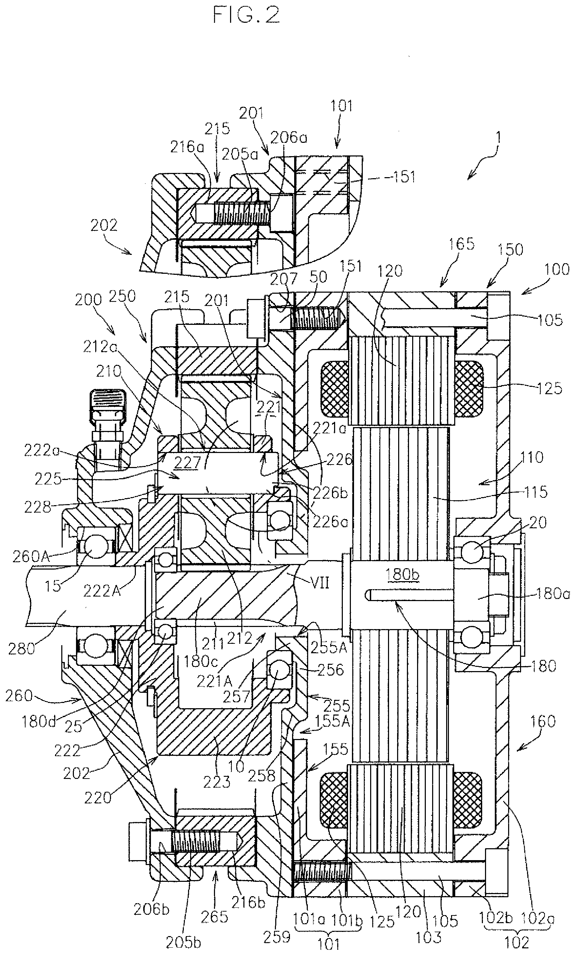

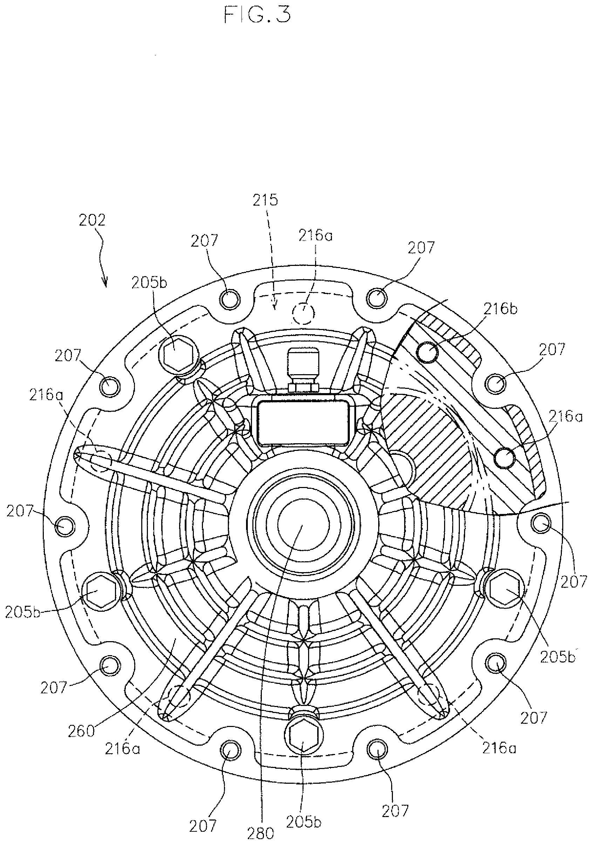

FIGS. 2 and 3 show a vertical cross-sectional front view and an end view of the electric motor driving device 1, respectively.

As shown in FIGS. 1 to 3, the electric motor driving device 1 comprises an electric motor unit 100 including an electric motor body 110 and a motor case 150 accommodating the electric motor body 110; and a planetary gear unit 200 including a planetary gear mechanism 210 that decelerates rotative power input from the electric motor body 110, a planetary output shaft 280 that outputs the rotative power decelerated by the planetary gear mechanism 210, and a planetary case 250 accommodating the planetary gear mechanism 210 and connected to the motor case 150.

As shown in FIG. 2, the electric motor body 110 has a rotor 115 having a permanent magnet, a plurality of stators 120 disposed radially outside the rotor 115 and arranged in the circumferential direction, and a plurality of motor coils 125 respectively wound around the plurality of stators 120.

As shown in FIG. 2, the motor case 150 has a motor-side first side wall 155 located on the side close to the planetary gear unit 200, a motor-side second side wall 160 facing the motor-side first side wall 155 across the electric motor body 110, and a motor-side peripheral wall 165 connecting the peripheral edges of the motor-side first and second side walls 155 and 160.

As shown in FIG. 2, an output opening 155A into which a power transmission shaft 180 for transmitting the rotative power of the electric motor body 110 to the planetary gear mechanism 210 is inserted is formed in the motor-side first side wall 155.

The structure of the power transmission shaft 180 will be described in detail below.

In the present embodiment, the electric motor unit 100 has first and second motor covers 101 and 102 that are mutually separate components.

The first motor cover 101 has a first end surface 101a forming the motor-side first side wall 155 and a first peripheral surface 101b extending from the outer peripheral edge of the first end surface 101a in the direction away from the planetary gear unit 200 along the axial direction of the power transmission shaft 180.

The second motor cover 102 has a second end surface 102a forming the motor-side second side wall 160 and a second peripheral surface 102b extending from the outer peripheral edge of the second end surface 102a in the direction toward the planetary gear unit 200 along the axial direction of the power transmission shaft 180.

The electric motor unit 100 further has a cylindrical intermediate motor cover 103.

The intermediate motor cover 103 is integrally connected to the first and second motor covers 101 and 102 by motor cover fasteners 105, with the intermediate motor cover 103 being sandwiched between the first and second motor covers 101 and 102.

In this case, the first peripheral surface 101b, the second peripheral surface 102b, and the intermediate motor cover 103 form the motor-side peripheral wall 165.

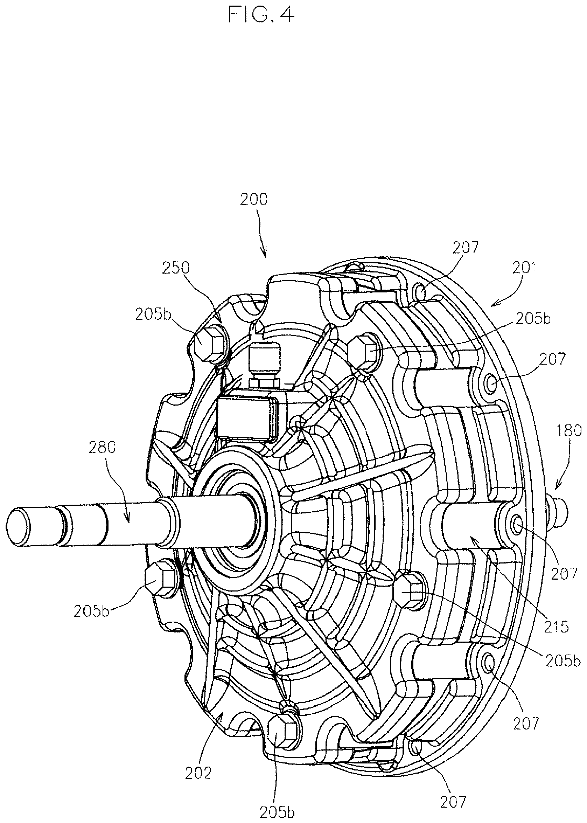

FIG. 4 shows a perspective view of the planetary gear unit 200, with the power transmission shaft 180 being attached thereto.

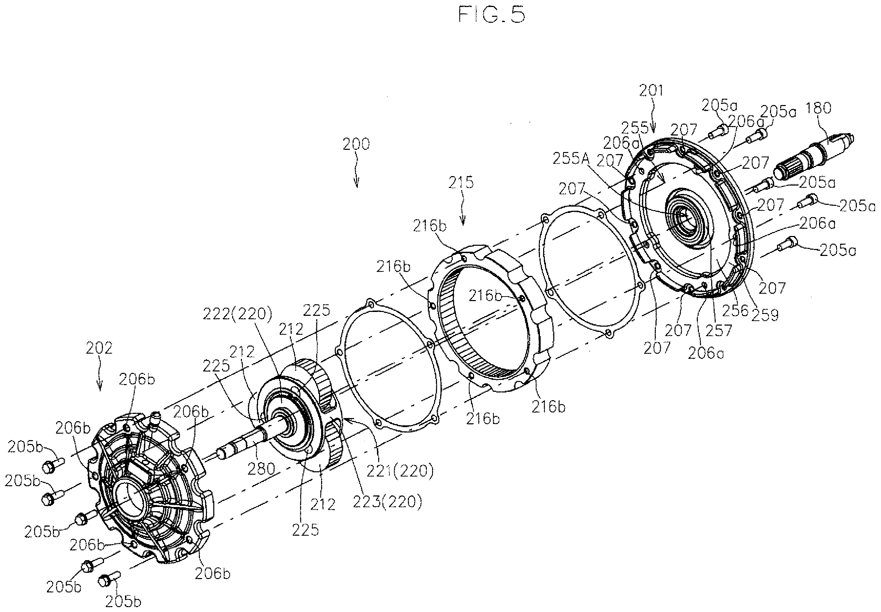

FIG. 5 shows an exploded perspective view of the planetary gear unit 200 provided with the power transmission shaft 180.

As shown in FIGS. 2 and 5, the planetary gear mechanism 210 has a sun gear 211 that inputs rotative power from the electric motor body 110 via the power transmission shaft 180; planetary gears 212 that mesh with the sun gear 211; carrier pins 225 that support the planetary gears 212 in a relatively rotatable manner with respect thereto and that orbit the sun gear 211 together with the planetary gears 212; an internal gear 215 that meshes with the planetary gears 212 and functions as a fixed element; and a carrier member 220 that supports the carrier pins 225 and to which the planetary output shaft 280 is connected.

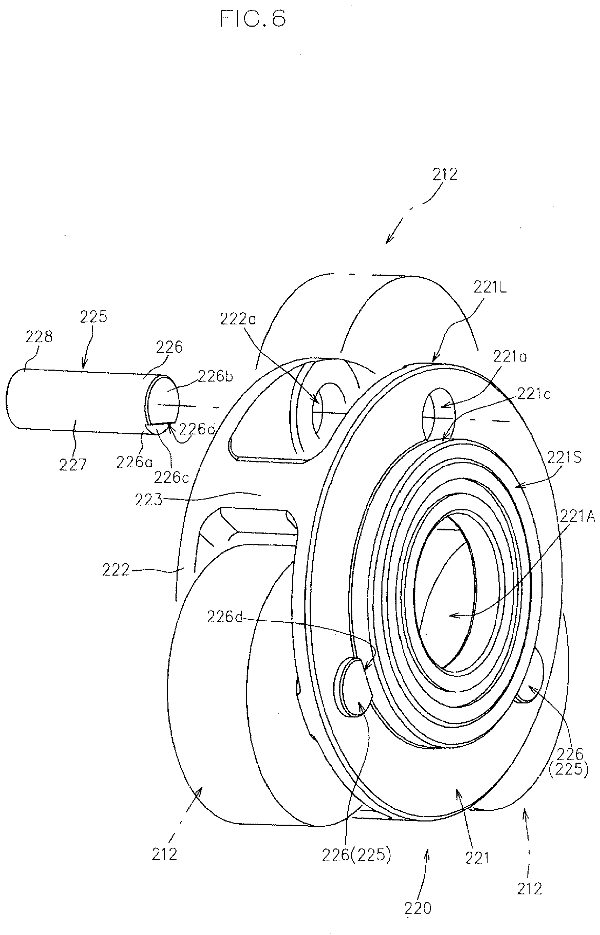

FIG. 6 shows an enlarged perspective view in the vicinity of the carrier pins 225 and the carrier member 220.

As shown in FIGS. 2, 5, and 6, the carrier member 220 has carrier-side first and second side walls 221 and 222 respectively located on the side close to the motor case 150 and on the side away from the motor case 150, with the planetary gears 212 sandwiched therebetween; and connecting pieces 223 connecting the carrier-side first and second side walls 221 and 222 while permitting the planetary gears 212 to partially extend more radially outward than the carrier-side first and second side walls 221 and 222.

A central opening 221A into which the power transmission shaft 180 is inserted and bearing holes 221a supporting the carrier pins 225 are formed in the carrier-side first side wall 221.

On the other hand, bearing holes 222a supporting the carrier pins 225 are formed in the carrier-side second side wall 222 at places facing the bearing holes 221a of the carrier-side first side wall 221.

In the present embodiment, the following configuration is provided in order to prevent the carrier pins 225 from being displaced in the insertion direction and rotating (revolving) around the axis.

As shown in FIGS. 2 and 6, a first end 226 is inserted into the bearing hole 222a formed in one of the carrier-side first and second side walls 221 and 222 (the carrier-side second side wall 222 in the present embodiment), a bearing hole 212a formed in the planetary gear 212, and the bearing hole 221a formed in the other of the carrier-side first and second side walls 221 and 222 (the carrier-side first side wall 221 in the present embodiment) in this order, and thereby the carrier pin 225, which is in a state in which an axially intermediate part 227 supports the planetary gear 212, is supported by the other side wall (the carrier-side first side wall 221 in the present embodiment) at the first end 226 and supported by the one side wall (the carrier-side second side wall 222 in the present embodiment) at the second end 228 on the side opposite to the first end 226.

Here, the first end 226 of the carrier pin 225 includes a proximal end region 226a extending from the intermediate part 227 toward the distal end side and a distal end region 226b extending from the proximal end region 226a toward the distal end side.

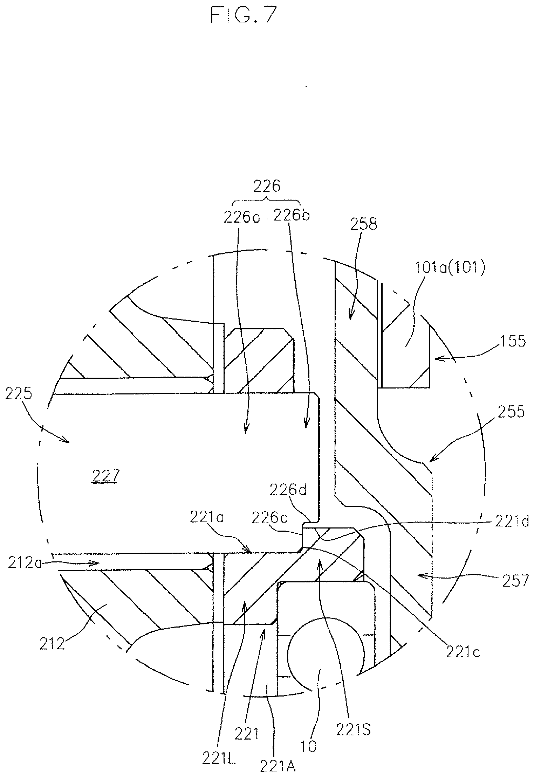

FIG. 7 shows an enlarged view of the VII part in FIG. 2.

As shown in FIGS. 2, 6, and 7, the distal end region 226b has such a cross-sectional shape that the cross-sectional shape of the proximal end region 226a is partially cut, and thereby a first stepped surface 226c facing the distal end side of the first end 226 is formed in the proximal end region 226a, and a second stepped surface 226d facing in the radial direction with reference to the axis of the carrier pin 225 is formed in the distal end region 226b.

In the present embodiment, as shown in, for example, FIG. 6, the proximal end region 226a has a circular cross-section, and the distal end region 226b has such a non-circular cross-section that the cross-sectional shape of the proximal end region 226a is partially cut.

The other side wall (the carrier-side first side wall 221 in the present embodiment) in which the bearing hole 221a for insertion of the first end 226 of the carrier pin 225 is formed is provided with first and second engagement surfaces 221c and 221d that are engaged with the first and second stepped surfaces 226c and 226d, respectively.

According to this configuration, it is possible without additional components to reliably prevent the carrier pin 225 from being displaced toward the distal end side in the insertion direction and rotating around the axis.

The carrier pin 225 is prevented from coming off in the removal direction (toward the proximal end side in the insertion direction) by a key.

In the present embodiment, the first and second engagement surfaces 221c and 221d are formed by the following structure.

That is, as shown in FIGS. 6 and 7, the other side wall (the carrier-side first side wall 221 in the present embodiment) has a large-diameter part 221L and a small-diameter part 221S that are coaxial with the power transmission shaft 180.

The bearing holes 221a are formed in the large-diameter part 221L.

The small-diameter part 221S is located more toward the distal end side in the insertion direction of the carrier pins 225 than the large-diameter part 221L and has such a diameter that the bearing holes 221a are partially covered.

In this configuration, the end surface of the small-diameter part 221S facing the bearing holes 221a forms the first engagement surface 221c, and the outer peripheral surface of the small-diameter part 221S forms the second engagement surface 221d.

This configuration makes it possible to form the first and second engagement surfaces 221c and 221d while simplifying the structure.

As shown in FIG. 2, the planetary case 250 has a planetary-side first side wall 255 close to the motor case 150 with respect to the axial direction, a planetary-side second side wall 260 located on the side opposite to the motor case 150 with respect to the axial direction, and a planetary-side peripheral wall 265 connecting the outer peripheral edges of the planetary-side first and second side walls 255 and 260.

An input opening 255A into which the power transmission shaft 180 is inserted is formed in the planetary-side first side wall 255.

That is, the power transmission shaft 180 extends from the internal space of the motor case 150 to the internal space of the planetary case 250 via the output opening 155A of the motor case 150 and the input opening 255A of the planetary case 250.

The power transmission shaft 180 further extends to the interior of the carrier member 220 via the central opening 221A of the carrier member 220.

In the present embodiment, the planetary-side first side wall 255 rotatably supports the carrier-side first side wall 221.

Specifically, as shown in FIG. 2, the planetary-side first side wall 255, which is formed with the input opening 255A into which the power transmission shaft 180 is inserted in the center in the radial direction, has an inner region 256 extending radially outward from the outer peripheral edge of the input opening 255A, an axially extending region 257 extending in the direction toward the carrier-side first side wall 221 from the inner end in the radial direction of the inner region 256, and an outer region 259 extending radially outward from the inner region 256 via a transitional region 258 and disposed farther from the electric motor unit 100 than the inner region 256 is.

In this configuration, as shown in FIG. 2, the carrier-side first side wall 221 is rotatably supported by the planetary-side first side wall 255 via a bearing member 10 provided on the outer peripheral surface of the axially extending region 257.

As shown in FIG. 2, the outer region 259 is at least partially in contact with the motor-side first side wall 155 when the motor case 150 and the planetary case 250 are connected.

On the other hand, the inner region 256, which is closer to the electric motor unit 100 than the outer region 259 is, that is, which protrudes in a direction toward the electric motor body in comparison with the outer region in an axial direction of the power transmission shaft, at least partially enters the motor case 150 via the output opening 155A of the motor-side first side wall 155 when the motor case 150 and the planetary case 250 are connected.

Thus, in the present embodiment, the carrier-side first side wall 221 of the carrier member 220 located on the side close to the electric motor unit 100 is rotatably supported by the planetary-side first side wall 255 of the planetary case 250, also the planetary-side first side wall 255 is caused to partially enter the motor case 150 via the output opening 155A, and thereby the overall length of the electric motor driving device 1 in the axial direction is shortened.

Moreover, in the present embodiment, as shown in FIGS. 2 and 5, by forming the internal gear 215 into a ring whose inner peripheral edge is provided with teeth that mesh with the planetary gears 212 and by positioning the sun gear 211, the planetary gears 212, and the internal gear 215 in axially the same location, the size of the planetary gear mechanism 210 with respect to the axial direction is also reduced.

In the present embodiment, the internal gear 215 forms the planetary-side peripheral wall 265 of the planetary case 250.

Specifically, as shown in FIGS. 2 and 5, the planetary gear unit 200 has first and second planetary covers 201 and 202 that are mutually separate components and form the planetary-side first and second side walls 255 and 260, respectively.

The first and second planetary covers 201 and 202 are integrally connected, with the internal gear 215 being sandwiched therebetween.

Specifically, as shown in FIGS. 2 and 5, a plurality of internal-gear-side fastening holes 216 disposed in the circumferential direction are formed in the internal gear 215.

On the other hand, planetary-cover-side fastening holes 206 corresponding to the internal-gear-side fastening holes 216 are formed in the first and second planetary covers 201 and 202.

In this configuration, the first planetary cover 201, the second planetary cover 202, and the internal gear 215 are integrally connected by fasteners 205 using the planetary-cover-side fastening holes 206 and the internal-gear-side fastening hole 216, with the internal gear 215 being sandwiched between the first and second planetary covers 201 and 202 so as to form the planetary-side peripheral wall 265 of the planetary case 250.

In the present embodiment, as shown in FIGS. 2 and 5, the plurality of internal-gear-side fastening holes 216 include internal-gear-side first threaded holes 216a opening toward the first planetary cover 201 and internal-gear-side second threaded holes 216b opening toward the second planetary cover 202.

On the other hand, the planetary-cover-side fastening holes 206 include first-planetary-cover-side fastening holes 206a formed in the first planetary cover 201 so as to correspond to the internal-gear-side first threaded holes 216a and second-planetary-cover-side fastening holes 206b formed in the second planetary cover 202 so as to correspond to the internal-gear-side second threaded holes 216b.

That is, the first planetary cover 201 and the internal gear 215 are connected by fasteners 205a, the second planetary cover 202 and the internal gear 215 are connected by fasteners 205b, and thereby the first planetary cover 201, the second planetary cover 202, and the internal gear 215 are integrally connected.

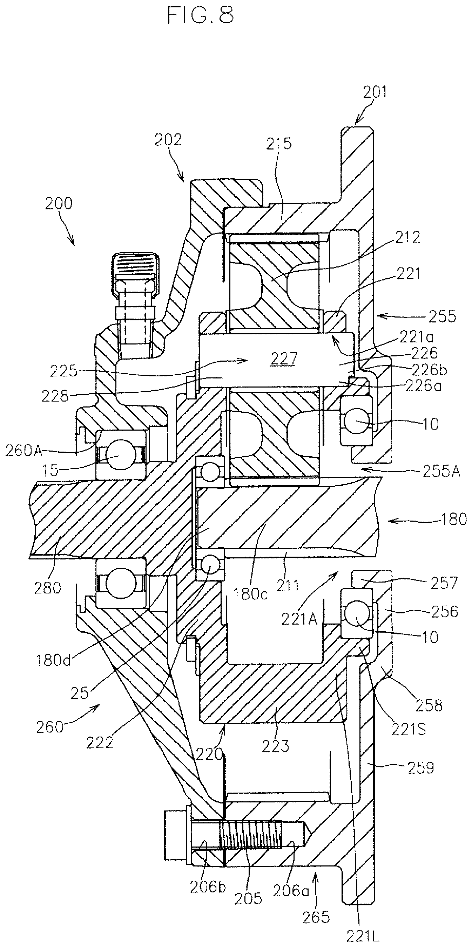

In place of this configuration, as shown in FIG. 8, it is also possible to form the internal gear 215 integrally with one of the first and second planetary covers 201 and 202.

In this case, the first and second planetary covers 201 and 202 are integrally connected by the fasteners 205 using the planetary-cover-side fastening holes 206a and 206b.

In the modification shown in FIG. 8, the internal gear 215 is integrally formed with the first planetary cover 201.

Next, a connecting structure for the planetary case 250 and the motor case 150 is described.

In the present embodiment, the planetary case 250 and the motor case 150 are removably connected by mounting fasteners 50 (see FIG. 2).

Specifically, as shown in FIGS. 2 and 5, planetary-case-side mounting holes 207 are formed in the first planetary cover 201, and motor-case-side mounting holes 151 corresponding to the planetary-case-side mounting holes 207 are formed in the motor case 150.

The planetary case 250 in which the first planetary cover 201, the second planetary cover 202, and the internal gear 215 are integrally connected is connected to the motor case 150 by the mounting fasteners 50 using the planetary-case-side mounting holes 207 and the motor-case-side mounting holes 151.

In such a configuration, it is necessary to configure the mounting fasteners 50 not to interfere with the internal gear 215.

Generally, positioning the planetary-case-side mounting holes 207 more radially outside than the outer peripheral edge of the internal gear 215 can prevent the mounting fasteners 50 from interfering with the internal gear 215.

However, this configuration requires the sizes of the first planetary cover 201 and the motor case 150 to be large in the radial direction.

That is, in order to provide the planetary-case-side mounting holes 207 more radially outside than the outer peripheral edge of the internal gear 215, it is necessary to provide the first planetary cover 201 with a flange at a place more radially outside the outer peripheral edge of the internal gear 215 and form the planetary-case-side mounting holes 207 in the flange, thus resulting in increased sizes of the first planetary cover 201 and the corresponding motor case 150 in the radial direction.

The inner diameter of the internal gear 215 (the diameter of the inner peripheral surface where teeth that mesh with the planetary gears 212 are disposed) is determined depending on the gear ratio of the planetary gear mechanism 210, and the outer diameter of the internal gear 215 is determined depending on the required strength of the internal gear 215.

That is, theoretically, reducing the size of the internal gear 215 in the radial direction can prevent a radially outward increase of the first planetary cover 201 and the motor case 150. But, as described above, since the inner diameter and the outer diameter of the internal gear 215 are determined depending on the gear ratio of the planetary gear mechanism 210 and the required strength of the internal gear 215, there is a limit to reducing the diameter of the internal gear 215.

In consideration of such a point, in the present embodiment, as shown in FIG. 5, the planetary-case-side mounting holes 207 are provided between the planetary-cover-side fastening holes 206 that are adjacent with respect to the circumferential direction, and the outer circumferential surface of the regions of the internal gear 215 corresponding to the planetary-case-side mounting holes 207 with respect to the circumferential direction are depressed radially inward compared with the outer circumferential surface of the regions where the internal-gear-side fastening holes 216 are formed.

According to this configuration, while determining the inner diameter and the outer diameter of the internal gear 215 depending on the gear ratio of the planetary gear mechanism 210 and the required strength of the internal gear 215, the planetary-case-side mounting holes 207 are placed as radially inward as possible, and it is thus possible to make the sizes of the first planetary cover 201 and the motor case 150 as small as possible with respect to the radial direction.

The planetary output shaft 280 is connected to the carrier member 220 in a relatively non-rotatable manner around the axis with respect thereto, with the planetary output shaft 280 being disposed on the same axis as the power transmission shaft 180.

Next, the planetary output shaft 280 is described.

In the present embodiment, as shown in FIG. 2, the planetary output shaft 280 extends outward from the planetary case 250 via an output opening 260A formed in the planetary-side second side wall 260, and is supported by a bearing member 15 disposed in the output opening 260A in a rotatable manner around the axis.

Specifically, in the present embodiment, an assembly in which the carrier member 220 and the planetary output shaft 280 are connected to each other in a relatively non-rotatable manner around the axis, is supported at both ends by the bearing member 10 inserted between the carrier-side first side wall 221 and the planetary-side first side wall 255 and the bearing member 15 inserted between the planetary-side second side wall 260 and the planetary output shaft 280.

In the present embodiment, as shown in FIG. 2, the planetary output shaft 280 is a component separate from the carrier member 220 and is connected to the carrier-side second side wall 222 in a relatively non-rotatable manner around the axis and in a detachable manner with respect thereto.

That is, a connecting hole 222A (see FIG. 2) having a non-circular cross-section is formed in the carrier-side second side wall 222, and the planetary output shaft 280 is connected to the connecting hole 222A in a relatively rotatable manner around the axis and in a removable manner with respect thereto.

Instead of this configuration, it is also possible to integrally form the carrier-side second side wall 222 and the planetary output shaft 280 as in the modification shown in FIG. 8.

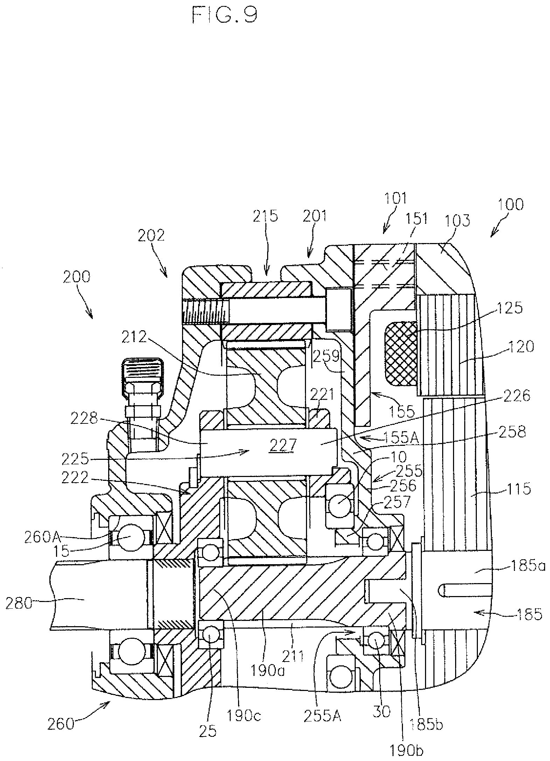

Alternatively, as in another modification shown in FIG. 9, on the premise that the planetary output shaft 280 is a component separate from the carrier-side second side wall 222 and that the proximal end of the planetary output shaft 280 and the connecting hole 222A of the carrier-side second side wall 222 have circular cross-sections, it is also possible to fit the proximal end of the planetary output shaft 280 to the connecting hole 222A of the carrier-side second side wall 222 in such a manner that the planetary output shaft 280 is relatively non-rotatable around the axis with respect to the carrier member 220 when rotational load on the planetary output shaft 280 is equal to or less than a predetermined value and the planetary output shaft 280 is relatively rotatable around the axis with respect to the carrier member 220 when rotational load on the planetary output shaft 280 exceeds the predetermined value.

According to this configuration, for example, when excessive load is applied to the drive wheel that is operably driven by the planetary output shaft 280, it is possible to effectively prevent the electric motor driving device 1 from being damaged by the load.

Now, the structure of the power transmission shaft 180 is described in detail.

As shown in FIG. 2, the power transmission shaft 180 is a single shaft in the present embodiment.

Specifically, the power transmission shaft 180 includes a rotor supporting region 180b supporting the rotor 115 in a relatively non-rotatable manners with respect thereto, a proximal end region 180a extending from the rotor supporting region 180b toward the side opposite to the planetary gear unit 200, a sun gear supporting region 180c entering the planetary case 250 from the rotor supporting region 180b via the output opening 155A and the input opening 255A and supporting the sun gear 211 in a relatively non-rotatable manner with respect thereto, and a distal end region 180d extending in the direction toward the planetary-side second side wall 260 beyond the sun gear supporting region 180c.

As shown in FIG. 2, the power transmission shaft 180 is supported at both the proximal end region 180a and the distal end region 180d.

That is, the power transmission shaft 180 has the proximal end region 180a supported by the motor-side second side wall 160 via a bearing member 20 and the distal end region 180d supported by the carrier-side second side wall 222 via a bearing member 25.

Instead of this configuration, as in the modification shown in FIG. 9, it is possible to configure the power transmission shaft 180 to include a motor output shaft 185 supporting the rotor 115 in a relatively non-rotatable manner with respect thereto and a planetary input shaft 190 supporting the sun gear 211 in a relatively non-rotatable manner with respect thereto.

Specifically, as shown in FIG. 9, the motor output shaft 185 has a rotor supporting region 185a supporting the rotor 115 in a relatively non-rotatable manner with respect thereto, a proximal end region (not shown in FIG. 9) extending from the rotor supporting region 185a toward the side opposite to the planetary gear unit 200 and supported by the motor-side second side wall 160 via the bearing member 20 (not shown in FIG. 9, see FIG. 2) in a rotatable manner rotation around the axis, and a motor-output-side connecting region 185b extending from the rotor supporting region 185a in the direction toward the planetary gear unit 200.

On the other hand, as shown in FIG. 9, the planetary input shaft 190 has a sun gear supporting region 190a supporting the sun gear 211 in a relatively non-rotatable manner with respect thereto, a planetary-input-shaft-side connecting region 190b extending from the sun gear supporting region 190a in the direction toward the electric motor unit 100 and supported by the planetary-side first side wall 255 via the bearing member 30 in a rotatable manner around the axis, and a distal end region 190c extending from the sun gear supporting region 190a in the direction toward the planetary-side second side wall 260 and supported by the carrier-side second side wall 222 via the bearing member 25 in a rotatable manner around the axis.

The planetary-input-shaft-side connecting region 190b and the motor-output-side connecting region 185b are connected to each other in a relatively non-rotatable manner around the axis and in a removable manner.

In the modification shown in FIG. 9, the end surface of the planetary-input-shaft-side connecting region 190b and the end surface of the motor-output-side connecting region 185b are concavo/convex-engaged to each other in a relatively non-rotatable manner around the axis and in an axially separable manner, and are configured to be connected and separated according to the connection and separation of the planetary case 250 and the motor case 150.

## Claims

1. A planetary gear unit (200) comprising a planetary input shaft (180, 190) that inputs rotative power, a sun gear (211) connected to the planetary input shaft (180, 190), a planetary gear (212) that meshes with the sun gear (211), a carrier pin (225) that supports the planetary gear (212) in a relatively rotatable manner with respect thereto and that orbits around the sun gear (211) together with the planetary gear (212), an internal gear (215) that is a ring-like member whose inner circumferential edge meshes with the planetary gear (212) and that functions as a fixed element, a carrier member (220) that supports the carrier pin (225) and that rotates around an axis line coaxial with the planetary input shaft (180, 190) in accordance with the orbital motion of the carrier pin (225) around the sun gear (211), a planetary output shaft (280) that is coaxial with the planetary input shaft (180, 190) and is relatively non-rotatable around the axis with respect to the carrier member (220), and a planetary case (250), wherein the planetary case (250) includes a first planetary cover (201) formed with an input opening (255A) into which the planetary input shaft (180, 190) is inserted, and a second planetary cover (202) that faces the first planetary cover (201) across the sun gear (211) and the planetary gear (212) and that is formed with an output opening (260A) into which the planetary output shaft (280) is inserted,
the internal gear (215) is formed with a plurality of internal-gear-side fastening holes (216) arranged in the circumferential direction,
the first and second planetary covers (201, 202) are formed with planetary-cover-side fastening holes (206) corresponding to the internal-gear-side fastening holes (216),
the first planetary cover (201), the second planetary cover (202) and the internal gear (215) are integrally connected one another using the planetary-cover-side fastening holes (206) and the internal-gear-side fastening hole (216), with the internal gear (215) being sandwiched between the first and second planetary covers (201, 202) so as to form a planetary-side peripheral wall (265) of the planetary case (250),
the planetary gear unit (200) being **characterized in that** the first planetary cover (201) is formed with mounting holes (207), each of which is arranged between the adjacent planetary-cover-side fastening holes (206) in the circumferential direction,
the first planetary cover (201), the second planetary cover (202) and the internal gear (215) are capable of being mounted to a fixing member using the mounting holes (207), with the first planetary cover (201), the second planetary cover (202) and the internal gear (215) being integrally connected one another, and
the internal gear (215) is configured so that the outer circumferential surface of the regions corresponding to the mounting holes (207) with respect to the circumferential direction are depressed radially inward compared with the outer circumferential surface of the regions where the internal-gear-side fastening holes (216) are formed.

2. A planetary gear unit (200) according to claim 1,
wherein the plurality of internal-gear-side fastening holes (216) include internal-gear-side first threaded holes (216a) opening toward the first planetary cover (201) and internal-gear-side second threaded holes (216b) opening toward the second planetary cover (202), and
wherein the planetary-cover-side fastening holes (206) include first-planetary-cover-side fastening holes (206a) formed in the first planetary cover (201) so as to correspond to the internal-gear-side first threaded holes (216a) and second-planetary-cover-side fastening holes (206b) formed in the second planetary cover (202) so as to correspond to the internal-gear-side second threaded holes (216b).

## Patentansprüche

1. Planetengetriebeeinheit (200), umfassend: eine Planetenantriebswelle (180, 190), die eine Rotationsantriebskraft überträgt, ein Sonnenrad (211), das mit der Planetenantriebswelle (180, 190) verbunden ist, ein Planetenrad (212), das mit dem Sonnenrad (211) verzahnt ist, einen Trägerstift (225), der das Planetenrad (212) in einer relativ zu sich drehbaren Weise stützt und der das Sonnenrad (211) zusammen mit dem Planetenrad (212) umkreist, ein inneres Rad (215), das ein ringartiges Element ist, dessen Innenumfangsrand mit dem Planetenrad (212) verzahnt ist und das als ein festes Element fungiert, ein Trägerelement (220), das den Trägerstift (225) stützt und das sich um eine Achsenlinie, die koaxial zu der Planetenantriebswelle (180, 190) verläuft, gemäß der Umlaufbewegung des Trägerstiftes (225) um das Sonnenrad (211) dreht, eine Planetenabtriebswelle (280), die koaxial zu der Planetenantriebswelle (180, 190) verläuft und mit Bezug auf das Trägerelement (220) und ein Planetengehäuse (250) relativ nicht-drehbar um die Achse ist, wobei:
das Planetengehäuse (250) eine erste Planetenabdeckung (201) aufweist, die mit einer Eingangsöffnung (255A) ausgebildet ist, in die die Planetenantriebswelle (180, 190) eingeführt ist, und eine zweite Planetenabdeckung (202) aufweist, die der ersten Planetenabdeckung (201) über das Sonnenrad (211) und das Planetenrad (212) hinweg zugewandt ist und die mit einer Ausgangsöffnung (260A) ausgebildet ist, in welche die Planetenabtriebswelle (280) eingeführt ist,
das innere Rad (215) mit mehreren innenradseitigen Befestigungslöchern (216) ausgebildet ist, die in der Umfangsrichtung angeordnet sind,
die erste und die zweite Planetenabdeckung (201, 202) mit planetenabdeckungsseitigen Befestigungslöchern (206) ausgebildet sind, die den innenradseitigen Befestigungslöchern (216) entsprechen,
der erste Planetenabdeckung (201), die zweite Planetenabdeckung (202) und das innere Rad (215) mittels der planetenabdeckungsseitigen Befestigungslöcher (206) und des innenradseitigen Befestigungsloches (216) integral miteinander verbunden sind, wobei das innere Rad (215) zwischen der ersten und der zweiten Planetenabdeckung (201, 202) angeordnet ist, um eine planetenseitige Umfangswand (265) des Planetengehäuses (250) zu bilden,
wobei die Planetengetriebeeinheit (200) **dadurch gekennzeichnet ist, dass** die erste Planetenabdeckung (201) mit Montagelöchern (207) ausgebildet ist, von denen jedes zwischen den benachbarten planetenabdeckungsseitigen Befestigungslöchern (206) in der Umfangsrichtung angeordnet ist,
die erste Planetenabdeckung (201), die zweite Planetenabdeckung (202) und das innere Rad (215) mittels der Montagelöcher (207) an einem Befestigungselement montiert werden können, wobei die erste Planetenabdeckung (201), die zweite Planetenabdeckung (202) und das innere Rad (215) integral miteinander verbunden sind, und
das innere Rad (215) so ausgebildet ist, dass die Außenumfangsfläche der Regionen, die den Montagelöchern (207) mit Bezug auf die Umfangsrichtung entsprechen, im Vergleich zur Außenumfangsfläche der Regionen, wo die innenradseitigen Befestigungslöcher (216) ausgebildet sind, radial einwärts vertieft sind.

2. Planetengetriebeeinheit (200) nach Anspruch 1,
wobei die mehreren innenradseitigen Befestigungslöcher (216) innenradseitige erste Gewindelöcher (216a) aufweisen, die in Richtung der ersten Planetenabdeckung (201) öffnen, und innenradseitige zweite Gewindelöcher (216b) aufweisen, die in Richtung der zweiten Planetenabdeckung (202) öffnen, und
wobei die planetenabdeckungsseitigen Befestigungslöcher (206) erste planetenabdeckungsseitige Befestigungslöcher (206a) aufweisen, die in der ersten Planetenabdeckung (201) so ausgebildet sind, dass sie den innenradseitigen ersten Gewindelöchern (216a) entsprechen, und zweite planetenabdeckungsseitige Befestigungslöcher (206b) aufweisen, die in der zweiten Planetenabdeckung (202) so ausgebildet sind, dass sie den innenradseitigen zweiten Gewindelöchern (216b) entsprechen.

## Revendications

1. Bloc d'engrenages planétaires (200) comprenant un arbre d'entrée planétaire (180, 190) qui applique une puissance rotative, un engrenage solaire (211) relié à l'arbre d'entrée planétaire (180, 190), un engrenage planétaire (212) qui engrène avec l'engrenage solaire (211), une tige de support (225) qui supporte l'engrenage planétaire (212) de manière relativement rotative par rapport à celle-ci et qui orbite autour de l'engrenage solaire (211) conjointement avec l'engrenage planétaire (212), un engrenage interne (215) qui est un élément en forme d'anneau dont le bord circonférentiel intérieur engrène avec l'engrenage planétaire (212) et qui fonctionne comme un élément fixe, un élément de support (220) qui supporte la tige de support (225) et qui tourne autour d'une ligne axiale coaxiale à l'arbre d'entrée planétaire (180, 190) selon le mouvement orbital de la tige de support (225) autour de l'engrenage solaire (211), un arbre de sortie planétaire (280) qui est coaxial à l'arbre d'entrée planétaire (180, 190) et est relativement non rotatif autour de l'axe par rapport à l'élément de support (220), et un carter planétaire (250),
dans lequel
le carter planétaire (250) comprend un premier couvercle planétaire (201) pourvu d'une ouverture d'entrée (255A) dans laquelle l'arbre d'entrée planétaire (180, 190) est inséré, et un second couvercle planétaire (202) qui fait face au premier couvercle planétaire (201) à travers l'engrenage solaire (211) et l'engrenage planétaire (212) et qui est pourvu d'une ouverture de sortie (260A) dans laquelle l'arbre de sortie planétaire (280) est inséré, l'engrenage interne (215) est pourvu d'une pluralité de trous de fixation côté engrenage interne (216) agencés dans la direction circonférentielle,
les premier et second couvercles planétaires (201, 202) sont pourvus de trous de fixation côté couvercle planétaire (206) correspondant aux trous de fixation côté engrenage interne (216),
le premier couvercle planétaire (201), le second couvercle planétaire (202) et l'engrenage interne (215) sont reliés solidairement les uns aux autres en utilisant les trous de fixation côté couvercle planétaire (206) et les trous de fixation côté engrenage interne (216), l'engrenage interne (215) étant pris en sandwich entre les premier et second couvercles planétaires (201, 202) de manière à former une paroi périphérique côté planétaire (265) du carter planétaire (250),
le bloc d'engrenages planétaires (200) étant **caractérisé en ce que** le premier couvercle planétaire (201) est pourvu de trous de montage (207), dont chacun est agencé entre les trous de fixation côté couvercle planétaire (206) adjacents dans la direction circonférentielle,
le premier couvercle planétaire (201), le second couvercle planétaire (202) et l'engrenage interne (215) peuvent être montés sur un élément de fixation à l'aide des trous de montage (207), le premier couvercle planétaire (201), le second couvercle planétaire (202) et l'engrenage interne (215) étant reliés solidairement les uns aux autres, et
l'engrenage interne (215) est configuré de sorte que la surface circonférentielle extérieure des régions correspondant aux trous de montage (207) par rapport à la direction circonférentielle est enfoncée radialement vers l'intérieur par rapport à la surface circonférentielle extérieure des régions où les trous de fixation côté engrenage interne (216) sont formés.

2. Bloc d'engrenages planétaires (200) selon la revendication 1,
dans lequel la pluralité de trous de fixation côté engrenage interne (216) comprend de premiers trous filetés côté engrenage interne (216a) qui donnent sur le premier couvercle planétaire (201) et de seconds trous filetés côté engrenage interne (216b) qui donnent sur le second couvercle planétaire (202), et
dans lequel les trous de fixation côté couvercle planétaire (206) comprennent des trous de fixation côté premier couvercle planétaire (206a) formés dans le premier couvercle planétaire (201) de manière à correspondre aux premiers trous filetés côté engrenage intérieur (216a) et des trous de fixation côté second couvercle planétaire (206b) formés dans le second couvercle planétaire (202) de manière à correspondre aux seconds trous filetés (216b) côté engrenage intérieur.
